# EUROPÄISCHE PATENTANMELDUNG

(11) **EP 0 701 145 A2**
(43) Veröffentlichungstag der Anmeldung: **13.03.1996**
(21) Anmeldenummer: 95117494.5
(22) Anmeldetag: 29.11.1990
(51) Int. Cl.: G01S 17/89, G01S 7/481

(54) **Entfernungsbildkamera**

(30) Priorität: 23.12.1989 DE 3942770
(62) Teilanmeldung aus: 90122830.4
(71) Anmelder: DORNIER GmbH, D-88039 Friedrichshafen (DE)
(72) Erfinder: Lux, Peter, Dr., D-88085 Langenargen (DE); Eibert, Max, Dr., D-88048 Friedrichshafen (DE)

(57) **Zusammenfassung**

Die Erfindung betrifft eine Entfernungsbildkamera mit
- einer Lichtquelle, deren Licht über eine
- Scanvorrichtung (Schwenkspiegel (4.3) oder rotierendes Prisma) zum spaltenweisen Abtasten einer Szene verwendet wird,
- einem Empfänger für das reflektiert Licht,
- einer Optik (4.2, 4.2'), und einer
- Ansteuer- und Auswerteelektronik (4.6), die aus der Laufzeit die Entfernung des jeweiligen Szenepunktes (4.4) berechnet,
wobei als Lichtquelle ein elektronisches Sendearray (4.1) vorgesehen ist und als Empfänger ein elektronisches Empfängerarray (4.5) vorgesehen ist.

## Beschreibung

Die Erfindung betrifft eine Entfernungsbildkamera.

Eine Entfernungsbildkamera ist ein Instrument zur Abtastung und Entfernungsvermessung eines Raumes oder einer Szene mit Objekten im Sehfeld der Kamera. Die Entfernungsmessung beruht auf dem Laufzeitmessprinzip mittels eines oder mehrerer Lichtquellen und Detektoren. Durch die Bestimmung des Zeitintervalls zwischen abgestrahltem und empfangenem Licht, reflektiert vom abzubildenden Objekt, und aus der Kenntnis der Lichtgeschwindigkeit können die Entfernung oder ein Entfernungswert bestimmt werden. Eine Matrix von Entfernungswerten (entsprechend dem Entfernungsbild) entsteht dadurch, daß eine serielle oder parallele punktweise Abtastung über das Blickfeld der Kamera durchgeführt wird.

Die auf diese Weise erzeugten Entfernungswerte bzw. Matrixelemente können direkt in einem Rechner oder in speziellen Elektronikschaltungen ausgewertet werden und/oder über einen Graphikprozess, z.B. Kodierung in Grauwerten, Gitterprojektion, Falschfarben, und so weiter einer Darstellungseinheit wie z.B. einem Monitor dargestellt werden.

Da es sich bei der Entfernungsbildkamera um ein aktives Prinzip handelt, ist zusätzlich zu der Gewinnung der Entfernungsinformation auch eine Auswertung und/oder Darstellung der reflektierten Amplitudeninformation möglich. Durch diesen Umstand kann neben dem sogenannten Entfernungsbild auch ein Amplituden- bzw. Reflektivitätsbild (hier wird neben der Amplitude des reflektierten Lichts (normales Foto) auch die Entfernungsinformation mitberücksichtigt) dargestellt werden.

Aufgabe der Erfindung ist es, eine Entfernungsbildkamera vorzuschlagen, die mechanisch stabil ist und eine hohe Aufnahmegeschwindigkeit zulässt.

Diese Aufgabe wird erfindungsgemäß gelöst von einer Entfernungsbildkamera mit den Merkmalen des Anspruchs 1. Ausführungen der Erfindung sind Gegenstände von Unteransprüchen.

Die Erfindung wird anhand von vier Figuren näher erläutert.

Es zeigen:
- Fig. 1: die Grundelemente einer Entfernungsbildkamera,
- Fig. 2 und 3: eine Entfernungsbildkamera mit mechanischer Spaltenabtastung und elektronischer Zeilenabtastung,
- Fig. 4: eine Entfernungsbildkamera mit rein elektronischer Abtastung.

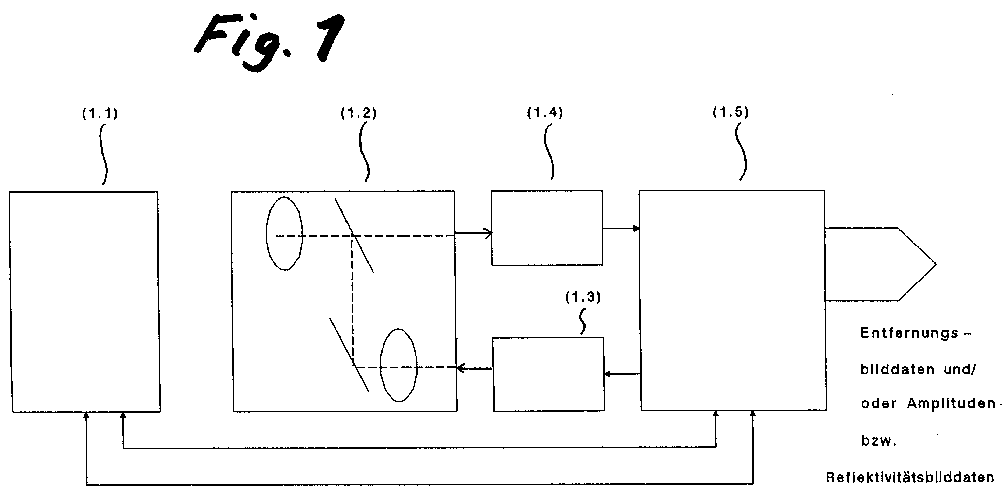

Fig. 1 zeigt die Grundelemente einer erfindungsgemäßen Entfernungsbildkamera:
- zweidimensionale Abtastung (zweidimensionaler Scan 1.1),
   z.B. in Zeile und Spalte
- Abbildungsoptik 1.2
- Impuls- oder Dauerstrichlichtquelle 1.3
- Detektor bzw. Empfänger 1.4
- Ansteuer- und Auswertelektronik 1.5
Zusätzlich zur Darstellung und Auswertung von Entfernungs- und Amplitudenbilddaten wird eine Rechner- oder Mikroprozessoreinheit mit einer Darstellungseinheit benötigt. Diese ist in Fig. 1 nicht gezeigt. Der Ausgang von Fig. 1 sind die Entfernungsbilddaten, Amplitudenbilddaten oder Reflektivitätsbilddaten.

Die wesentlichen Leistungsparameter einer Entfernungsbildkamera werden von der zweidimensionalen Abtastung bestimmt. Insbesondere für Systeme mit grösserer Bildpunktzahl, schneller Bildfolgefrequenz und grosser Reichweite ist die Ausführung der zweidimensionalen Abtastung unter anderem der leistungsbestimmende Faktor. Die Erfindung bezieht sich daher auf eine Verbesserung der zweidimensionalen Abtastvorrichtung.

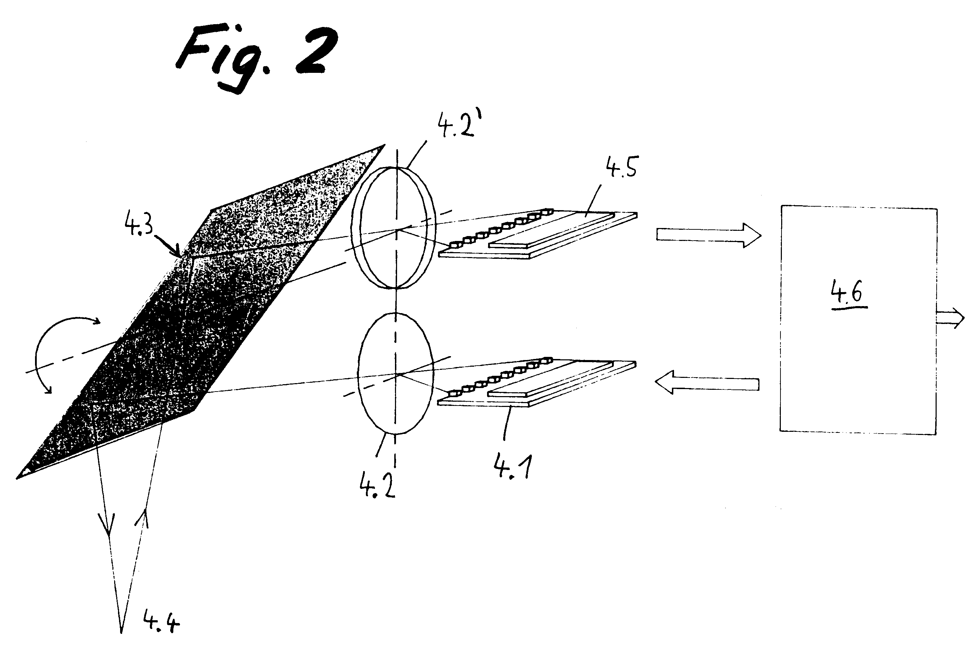

Fig. 2 zeigt eine Entfernungsbildkamera mit elektronischem Zeilenscan. Die Spaltenabtastung wird über den Spiegel 4.3 mechanisch erreicht.
Bei dieser Vorrichtung ist eine mechanische Abtastung nur noch in der Spalte nötig, ansonsten wird die gesamte Bilderzeugung elektronisch durchgeführt. Ein Laserdiodenzeilenarray 4.1, angesteuert über Treiber und Multiplexer, besteht aus N-Laserdioden-Chips, die in einer Reihe angebracht sind. Die Ansteuerung erfolgt seriell.
Ein Lichtimpuls, ausgestrahlt vom Laserdiodenarray 4.1 wird über die Abbildungsoptik 4.2, die Teil einer Biaxial-Optik (4.2 und 4.2') ist, und über den Schwenkspiegel 4.3 auf den Punkt 4.4 der Szene gelenkt. Das von dort reflektierte Licht gelangt über den Spiegel 4.3 zurück in die Biaxial-Optik 4.2' und von dort auf das elektronische Empfängerarray 4.5. Die dort erzeugten elektrischen Signale gelangen in die elektronische Ansteuer- und Auswerteeinheit 4.6. In der Elektronik 4.6 wird dann aus Sende- und Empfangssignal ein Entfernungswert ermittelt. Eine entsprechende Elektronik ist z.B. in der Patentanmeldung P 39 15 627.3 vorgeschlagen.

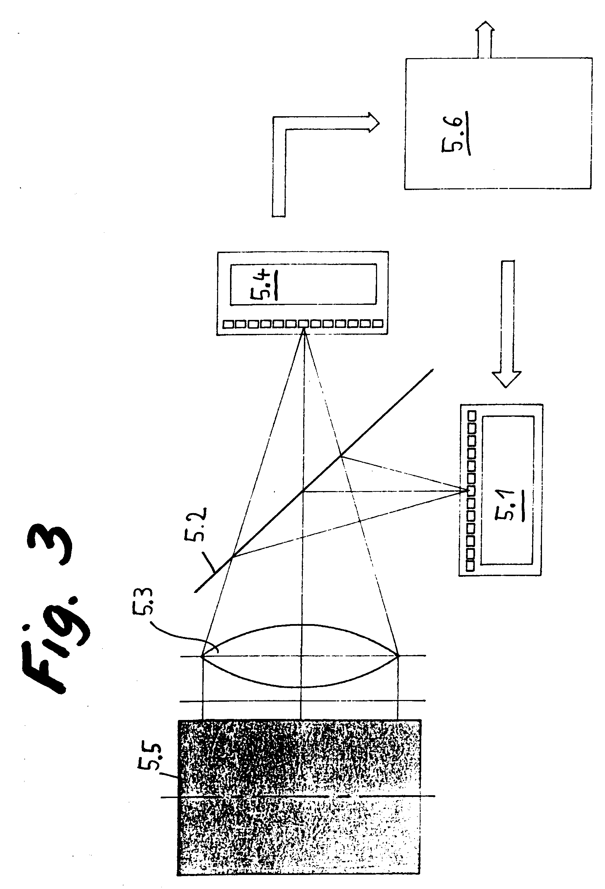

Fig. 3 zeigt eine Entfernungsbildkamera mit rein elektronischem Zeilenscan und mechanischer Spaltenabtastung, jedoch mit koaxialer Optik. Das vom Laserdiodenarray 5.1 ausgesandte Licht gelangt über den teildurchlässigen Spiegel 5.2 und die Koaxial-Optik 5.3 auf den Schwenkspiegel 5.5, der den Spaltenscan durchführt.
Der reflektierte Lichtimpuls wird wiederum rückwärts über den Spiegel 5.5 und die Optik 5.3 auf den entsprechenden Detektor N des Empfängerarrays 5.4 abgebildet, das auch mit Multiplexer und Empfängerschaltungen ausgerüstet ist. Die Auswertung und Bestimmung der Laufzeit sowie der Entfernungswerte der Entfernungsbildpixel werden in der Elektronik 5.6 durchgeführt.

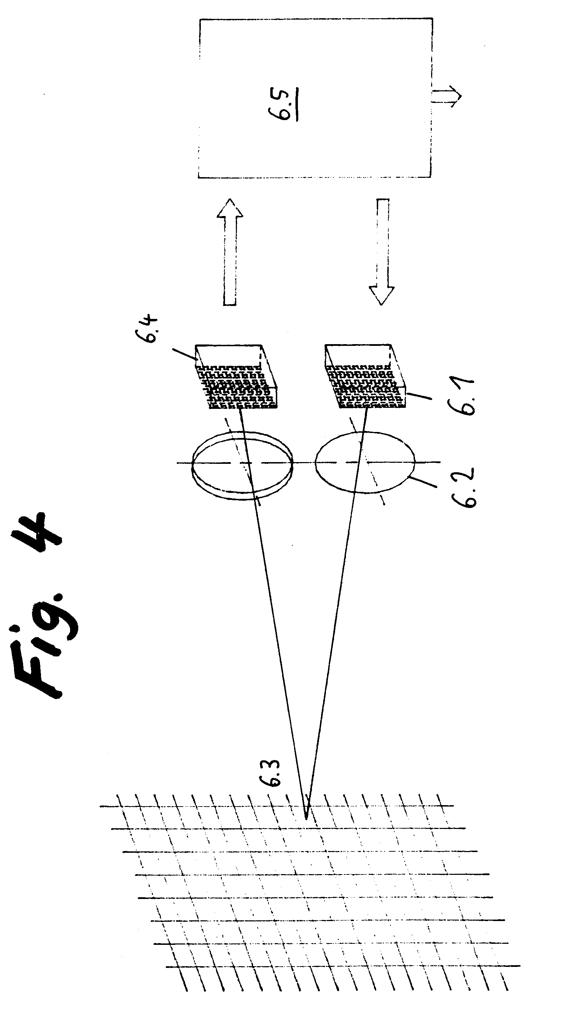

Fig. 4 zeigt eine vollständig elektronische Abtastung in beiden Dimensionen (Zeilen und Spalten) ohne mechanisch bewegliche Teile, wodurch eine besonders robuste Ausführung entsteht.
Als Lichtquelle dient ein zweidimensionales Laserdiodenfeld 6.1, dessen Licht über die Optik 6.2 auf einen Punkt 6.3 der Szene geleitet wird. das von dort (6.3) reflektierte Licht gelangt über die hier biaxial gezeigte Optik 6.2 wieder auf das entsprechende Pixel des Empfängerdiodenfeldes 6.4. Die Ansteuerung und die Auswertung erfolgt in der Elektronikeinheit 6.5. Das Laserdiodenfeld 6.1 und das Empfängerdiodenfeld 6.4 sind hier rechteckig und eben ausgeführt.
Möglich sind, in Abstimmung mit der Optik 6.2, auch gekrümmte Felder, die keinen rechteckigen Querschnitt haben müssen.

Die in den Fig. 2 und 4 vorgeschlagene Doppel-Optik-Systeme können mit einer anderen Optikauslegung auch als Koaxial-Optiken ausgeführt sein, wie Fig. 3 dies beispielhaft zeigt.

## Patentansprüche

1. Entfernungsbildkamera mit
- einer Lichtquelle, deren Licht über eine
- Scanvorrichtung (Schwenkspiegel (4.3) oder rotierendes Prisma) zum spaltenweisen Abtasten einer Szene verwendet wird,
- einem Empfänger für das reflektiert Licht,
- einer Optik (4.2, 4.2'), und einer
- Ansteuer- und Auswerteelektronik (4.6), die aus der Laufzeit die Entfernung des jeweiligen Szenepunktes (4.4) berechnet,
**dadurch gekennzeichnet**, daß
als Lichtquelle ein elektronisches Sendearray (4.1) vorgesehen ist und als Empfänger ein elektronisches Empfängerarray (4.5) vorgesehen ist.

2. Entfernungsbildkamera nach Anspruch 1, **gekennzeichnet durch** zwei elektronisch angesteuerte zweidimensionale Diodenfelder (Laserdiodenfeld 6.1, Empfängerdiodenfeld 6.4) als Lichtquelle und Empfänger zur Durchführung der zweidimensionalen Abtastung.

3. Entfernungsbildkamera nach Anspruch 1 oder 2, **dadurch gekennzeichnet**, daß als Optik eine koaxiale Optik (5.3) für den Sendezweig und den Empfangszweig und ein Strahlteiler (teildurchlässiger Spiegel 5.2) vorgesehen sind.
